# FASCICULE DE BREVET EUROPEEN

(11) **EP 1 349 643 B1**
(45) Date de publication et mention de la délivrance du brevet: **28.07.2004**
(21) Numéro de dépôt: 01999420.1
(22) Date de dépôt: 04.12.2001
(51) Int. Cl.: B01D 65/02

(54) **DECOLMATAGE D'UN FILTRE A FIBRES CREUSES FONCTIONNANT EN MODE FRONTAL**
RÜCKSPÜLUNG EINES STATISCH BETRIEBENEN HOHLFASERFILTERS
BACKWASHING OF A HOLLOW FIBRE FILTER OPERATING IN DEAD-END MODE

(30) Priorité: 06.12.2000 FR 0015808
(43) Date de publication de la demande: 08.10.2003
(73) Titulaire: COMMISSARIAT A L'ENERGIE ATOMIQUE, 75752 Paris Cédex 15 (FR); COMPAGNIE GENERALE DES MATIERES NUCLEAIRES, 78140 Velizy Villacoublay (FR)
(72) Inventeur: BARNIER, Henri, 13100 AIX EN PROVENCE (FR); GIVAUDAN, Jean, 04220 SAINTE TULLE (FR)
(74) Mandataire: Poulin, Gérard
(86) Numéro de dépôt international: PCT/FR2001/003823
(87) Numéro de publication internationale: WO 2002/045829

(56) Documents cités:
- WO-A-91/13673
- WO-A-94/29007
- US-A- 4 540 490
- US-A- 5 209 852
- US-A- 5 690 829

## Description

### Domaine technique

L'invention concerne un procédé de décolmatage d'un filtre à fibres creuses fonctionnant en mode frontal. Elle concerne également un dispositif de filtrage permettant l'application de ce procédé.

L'invention permet d'améliorer les performances de ce type d'équipement de séparation solides/liquide.

### Etat de la technique antérieure

En filtration frontale d'une suspension contenant des particules solides de faibles à très faibles dimensions, la séparation solides/liquide peut s'effectuer sur des média filtrants en forme de fibres creuses organiques sous l'action d'une pression suffisante pour assurer le transfert du liquide de l'extérieur des fibres vers l'intérieur de celles-ci.

Les fibres utilisées, assemblées parallèlement en faisceaux dans un corps de filtre, sont disposées de manière à pouvoir récupérer dans un seul circuit l'ensemble du liquide filtré. Par contre, les solides déposés sur la surface externe des fibres restent en place jusqu'à ce que leur accumulation entraîne une perte de charge qui diminue d'autant la pression de filtration avec en conséquence une baisse de la production de liquide filtré. Lorsque la production de liquide filtré atteint un seuil bas de consigne, il doit être procédé au décolmatage des fibres. Ce décolmatage nécessite un arrêt de la séparation solides/liquide pour mettre en oeuvre une technique appropriée de décolmatage qui doit permettre d'évacuer de la surface des fibres les particules déposées sur celles-ci, puis d'évacuer du corps de filtre l'ensemble des solides dans une purge générale du système. Les fibres décolmatées sont alors aptes à reprendre leur fonction de séparation solides/liquide. C'est donc un mode de fonctionnement séquentiel associant une phase de filtration, une phase de décolmatage et une phase de purge du filtre.

Les filtres à fibres creuses organiques sont mis en oeuvre depuis plus de vingt ans dans divers domaines où existent des besoins de séparation solides/liquide. Ils présentent l'avantage d'une grande surface filtrante pour un faible encombrement.

Les fibres organiques sont disponibles dans divers matériaux (PVA ou alcool polyvinylique, PS ou polysulfone, etc.) et sont obtenues par filage dans les dimensions approximatives suivantes :
- diamètre externe entre 0,3 et 3 mm,
- diamètre interne entre 0,15 et 2 mm,
- longueur à la demande, jusqu'à plusieurs mètres.

Les fibres sont assemblées en fagots ou faisceaux de plusieurs milliers de fibres d'égale longueur. Elles peuvent être maintenues à une extrémité et obturées à l'autre extrémité qui reste libre. Elles peuvent aussi être maintenues à leurs deux extrémités qui restent ouvertes. Les deux extrémités des fibres peuvent être opposées (fibres droites) ou situées au même niveau (fibres en U).

Les fibres sont poreuses, avec des diamètres de pores dₚ permettant l'arrêt intégral des plus fines particules présentes dans le fluide à traiter (typiquement dₚ est supérieur ou égal à 0,1 µm). En milieu liquide, une mesure de "pression de point. de bulle" permet d'accéder à cette dimension moyenne dₚ, la pression d'air de point de bulle étant d'autant plus élevée que dₚ est faible.

Les faisceaux ou fagots de fibres sont montés à l'unité ou en parallèle dans des carcasses adéquates ou corps de filtre susceptibles d'assurer l'admission sous pression (inférieure ou égale à 3 bar) par le bas ou par le haut du fluide à filtrer. Les corps de filtre permettent d'assurer également l'évacuation du fluide filtré, étant entendu qu'il existe sur le corps du filtre, de par sa conception, un isolement total du-circuit d'apport de fluide à filtrer et du circuit d'évacuation de fluide filtré.

Sur consigne basse de production de liquide filtré, le décolmatage de ce type de filtre s'effectue soit par rétro-injection de liquide filtré pendant une durée suffisante pour provoquer le décrochage des particules solides de la surface des fibres, soit par rétro-injection de gaz sous pression pendant une durée équivalente (voir le brevet US-4 540 490). La rétro-injection signifie que, pendant un temps court, un fluide liquide ou gazeux circule en sens inverse du sens normal de filtration, donc depuis l'intérieur des fibres vers l'extérieur de celles-ci sous l'action d'une pression mécanique suffisante. Dans le cas d'une rétro-injection de liquide, cette pression peut être faible, moyenne ou forte. Dans le cas d'une rétro-injection de gaz (air, azote par exemple), cette pression doit être supérieure à la pression de point de bulle des fibres qui dépend du diamètre de pore dₚ.

Dans le mode de décolmatage par rétro-injection de gaz, pour un corps de filtre en position verticale, il y a alors ascension des bulles de gaz sur la face externe des fibres qui se trouvent dans une phase liquide contenant les solides déplacés depuis la surface des fibres. La purge du mélange solides/liquide contenu dans le corps de filtre, qui suit la phase de décolmatage est favorisée par un positionnement vertical du corps de filtre et par un montage des fibres où seule la partie supérieure de celles-ci est maintenue dans le corps, la partie inférieure restant libre. Ce type de purge est défavorisé par tout autre montage.

Ce mode de décolmatage doit être réalisé dans un minimum de temps, avec une fréquence faible, tout en provoquant une élimination maximale des solides déposés sur les fibres. Dans le cas contraire, il en résulte une perte de productivité et un colmatage résiduel qui, cumulé séquence après séquence, nécessite à la longue un nettoyage chimique des fibres. Un tel nettoyage chimique est contraignant et producteur d'effluents secondaires. A titre indicatif, le nettoyage doit être effectué une fois par jour. Tout l'art de l'opérateur consiste donc a bien maîtriser la filtration (par ses paramètres spécifiques) et le décolmatage par rétro-injection.

L'adhésion des particules sur la surface des fibres dépend de nombreux paramètres. On peut citer principalement :
- la nature des particules et la nature des fibres (interactions particule-surface),
- la composition saline du liquide contenant les particules (la faible salinité étant favorable à l'adhésion des particules sur les fibres) ou la caractéristique chimique particulière du même liquide (pH),
- la pression mécanique de filtration (les pressions élevées favorisant l'incrustation ou la pénétration des particules dans les fibres poreuses).

L'adhésion complémentaire de particules sur une première couche de particules, dépendant des mêmes paramètres, aboutit à une structure de type "gâteau".

L'évacuation des particules ou du gâteau déposé sur la surface des fibres est alors le résultat d'actions mécaniques diverses s'exerçant entre la surface des fibres et la première couche de particules, induites par le passage forcé d'un fluide liquide ou gazeux, puis par l'ascension des bulles de gaz au sein du faisceau de fibres dans le dernier cas.

L'évacuation des particules ou du gâteau fracturé lors de la purge est d'autant plus efficace que celle-ci est rapide et qu'il existe au niveau des fibres une certaine liberté de mouvement.

### Exposé de l'invention

La présente invention a été conçue pour permettre une évacuation particulièrement efficace et rapide des particules ou du gâteau déposé sur la surface des fibres creuses.

Elle a pour objet un procédé de décolmatage d'un filtre à fibres creuses fonctionnant en mode frontal, le filtre comprenant un corps de filtre maintenant les fibres creuses en position verticale, le liquide à filtrer étant introduit dans le volume du corps de filtre par le bas, le filtrat étant évacué par le haut du filtre, le procédé de décolmatage comprenant une rétro-injection de gaz dans les fibres creuses, caractérisé en ce qu'il comprend également une mise en circulation de liquide de décolmatage dans le volume du corps de filtre, cette circulation de liquide se faisant du haut vers le bas du corps de filtre.

Avantageusement, ladite mise en circulation de liquide de décolmatage consiste à faire circuler le liquide à filtrer restant dans le corps de filtre grâce à un circuit branché en parallèle sur le corps de filtre.

Le liquide de décolmatage peut circuler avec un débit permettant l'entraînement temporaire de bulles du gaz rétro-injecté dans les fibres creuses.

De préférence, la phase de décolmatage est consécutive à l'atteinte d'une valeur de consigne choisie parmi une consigne de débit de filtration minimal et une consigne de volume cumulé de filtrat maximal.

Selon un mode particulier de mise en oeuvre, la phase de décolmatage comprend les étapes suivantes :
- arrêt de l'introduction du liquide à filtrer dans le corps de filtre,
- ensuite, mise à une pression extérieure du haut du filtre,
- ensuite, rétro-injection du gaz dans les fibres creuses à une pression supérieure à la pression de point de bulle, et
- mise en circulation simultanée du liquide de décolmatage.

Le gaz rétro-injecté peut être choisi parmi l'air, l'azote et les autres gaz neutres.

Avantageusement, le procédé comprend une étape supplémentaire finale consistant à vidanger le corps de filtre.

La présente invention a aussi pour objet un dispositif de filtrage comprenant un filtre à fibres creuses fonctionnant en mode frontal, le filtre comprenant un corps de filtre maintenant les fibres creuses en position verticale, le corps de filtre comprenant des moyens d'introduction du liquide à filtrer dans le volume du corps de filtre, ces moyens d'introduction étant situés dans le bas du corps de filtre, le filtre comprenant des moyens d'évacuation du filtrat et de rétro-injection d'un gaz de décolmatage situés dans le haut du corps de filtre, caractérisé en ce que le dispositif comprend un circuit d'aide au décolmatage des fibres creuses, ce circuit permettant une introduction de liquide de décolmatage dans le haut du volume du corps de filtre et son évacuation par le bas du corps de filtre.

De préférence, les fibres creuses sont maintenues uniquement par leurs extrémités supérieures.

Le corps de filtre peut comprendre un répartiteur permettant de distribuer le liquide à filtrer dans le volume du corps de filtre. Un tel répartiteur présente l'avantage de provoquer une ouverture partielle "en parapluie" du faisceau de fibres, ce qui favorise une distribution homogène du liquide introduit sur les fibres et évite une accumulation localisée des particules sur quelques fibres périphériques.

De préférence, le circuit d'aide au décolmatage est un circuit branché en parallèle sur le corps de filtre et permettant de faire circuler, au cours d'une phase de décolmatage, le liquide à filtrer restant dans le corps de filtre. Ce circuit d'aide au décolmatage peut comprendre une vanne d'ouverture/fermeture par exemple à membrane et une pompe qui peut être choisie parmi les pompes de type centrifuge, péristaltique et à vortex.

### Brève description des dessins

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue schématique en coupe verticale d'un dispositif de filtrage selon l'invention, représenté en phase de filtration,
- la figure 2 est une vue schématique en coupe verticale du dispositif de filtrage correspondant à la figure 1 mais représenté en phase de décolmatage.

### Description détaillée d'un mode de réalisation de l'invention

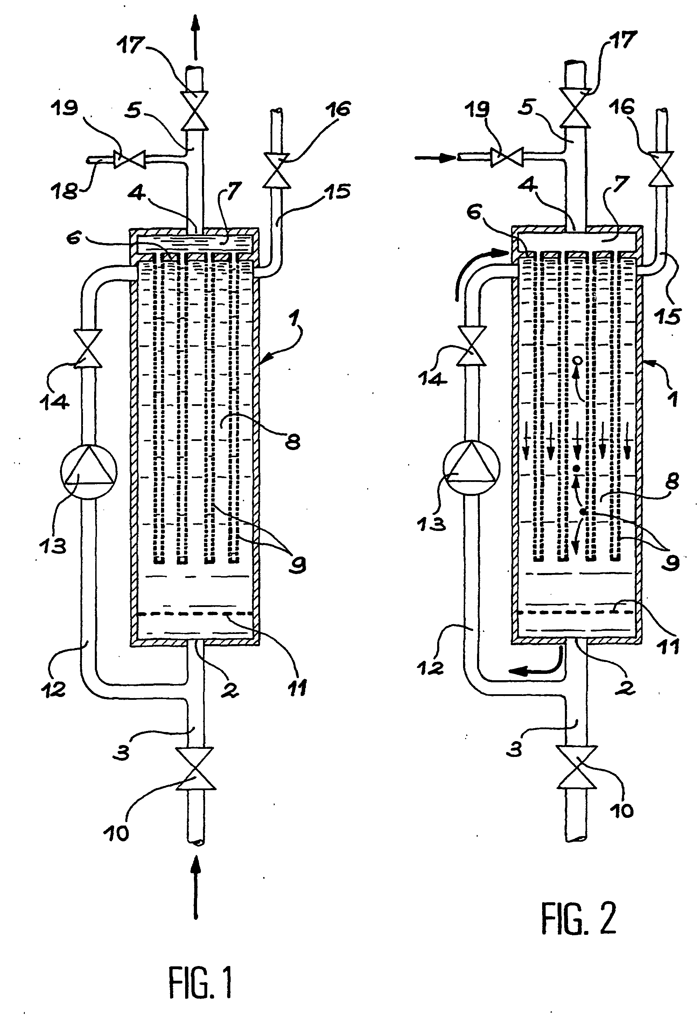

Le dispositif de filtrage représenté à la figure 1 comprend un corps de filtre 1 en forme de cylindre vertical fermé à ses extrémités. Son extrémité inférieure comprend un orifice 2 branché à une conduite 3 d'introduction de liquide à filtrer. Son extrémité supérieure comprend un orifice 4 branché à une conduite 5 d'évacuation du filtrat. La conduite 5 est équipée d'une vanne 17. Entre la vanne 17 et l'orifice d'évacuation 14, une conduite 18, équipée d'une vanne 19, est connectée sur la conduite 5.

La partie supérieure du corps de filtre 1 est pourvue d'une plaque 6 séparant le corps de filtre en une chambre d'évacuation 7, donnant sur l'orifice d'évacuation 4, et en une partie plus importante 8 appelée volume du corps de filtre. La plaque 6 maintient un faisceau de fibres creuses 9 dont seulement quelques unes ont été représentées. Les fibres sont obturées à leur extrémité inférieure. La surface extérieure des fibres creuses est ainsi en contact avec le liquide à filtrer qui est introduit dans le volume 8 du corps de filtre lorsque la vanne d'admission 10 est ouverte. L'intérieur des fibres creuses 9 communique avec la chambre d'évacuation 7.

La partie inférieure du corps de filtre 1 comprend un répartiteur de fluide 11 qui délivre un flux de liquide homogène sur les fibres creuses 9. Les fibres étant flexibles et maintenues uniquement par leur extrémité supérieure, le flux de liquide à filtrer provoque l'ouverture partielle "en parapluie" du faisceau de fibres.

Le filtre selon l'invention comporte en outre un circuit branché en parallèle sur le corps de filtre. Ce circuit est constitué principalement d'une conduite 12 branchée, en partie inférieure, sur la conduite 3 d'introduction de liquide à filtrer, entre l'orifice 2 et la vanne d'admission 10. La conduite 12 est branchée, en partie supérieure, sur le corps de filtre 1, juste sous la plaque 6. Elle est équipée d'une pompe 13 et d'une vanne 14. La pompe 13 peut être de type centrifuge, péristaltique ou à vortex. La vanne 14 est par exemple une vanne à membrane.

Une canalisation d'évent 15 équipée d'une vanne 16 est branchée en partie supérieure du corps de filtre 1, juste sous la plaque 6.

En phase de filtrage, la pompe 13 est arrêtée et les vannes 14, 16 et 19 sont fermées. La vanne 10 étant ouverte, le liquide à filtrer est introduit par la conduite 3 dans le corps de filtre 1. Le filtrat issu de l'intérieur des fibres creuses 9 débouche dans la chambre d'évacuation 7 pour être évacué par la conduite 5.

L'ordre de décolmatage des fibres creuses peut être asservi à deux consignes particulières : une consigne de débit de filtration minimal ou une consigne de volume cumulé de filtrat. Cette seconde consigne permet de maîtriser la quantité de solides déposée par unité de surface filtrante.

L'une ou l'autre des consignes de décolmatage provoque :
- l'arrêt de l'admission du fluide à filtrer par fermeture de la vanne 10,
- la fermeture de la vanne 17,
- l'ouverture de l'évent du corps de filtre par l'ouverture de la vanne 16,
- l'ouverture de la vanne 19 pour la rétro-injection d'un gaz (de l'air ou de l'azote) par la conduite 18 et le tronçon de conduite 5 connecté à l'orifice 4, le gaz étant à une pression légèrement supérieure à la pression de bulle,
- l'ouverture de la vanne 14 et la mise en route de la pompe 13 pour la recirculation du volume mort de fluide dans le corps de filtre 1.

La rétro-injection de gaz et la recirculation du fluide sont deux opérations qui sont avantageusement simultanées.

Il se produit alors, dans le corps de filtre et dans le circuit de dérivation, une circulation d'un mélange liquide-solide-gaz. La pompe 13 permet l'obtention, dans le corps de filtre et au niveau des fibres, d'une vitesse descendante moyenne du liquide et des solides voisine de 4 à 5 cm/s. Il existe dans le corps de filtre, au niveau des fibres creuses, un déplacement des bulles de gaz qui peut être temporairement ascendant ou descendant suivant la taille des bulles. Il y a frottement ou chocs inter-particules entre les particules libres et les particules encore adhérentes à la. surface des fibres. Il se produit une agitation des fibres entre elles par suite des diverses circulations de fluides.

Toutes ces conséquences entraînent un meilleur décrochement des particules de la surface des fibres sous l'action de diverses contraintes (ou gradients) dues au liquide et/ou au gaz, sous l'action des frottements inter-particules.

Après un temps suffisant de décolmatage (quelques minutes), la purge du corps de filtre est effectuée dans les conditions connues de l'homme de l'art par vidange du corps de filtre. La phase de filtration est relancée après remplissage du corps de filtre par le liquide à filtrer.

Par rapport aux techniques de décolmatage de l'art connu mentionnées plus haut, il apparaît que l'invention permet de repousser la fréquence du décolmatage chimique d'un jour à une semaine, ce qui montre l'efficacité de l'invention.

## Revendications

1. Procédé de décolmatage d'un filtre à fibres creuses fonctionnant en mode frontal, le filtre comprenant un corps de filtre (1) maintenant les fibres creuses (9) en position verticale, le liquide à filtrer étant introduit dans le volume du corps de filtre (1) par le bas, le filtrat étant évacué par le haut du filtre, le procédé de décolmatage comprenant une rétro-injection de gaz dans les fibres creuses (9), **caractérisé en ce qu'**il comprend également une mise en circulation de liquide de décolmatage dans le volume du corps de filtre (1), cette circulation de liquide se faisant du haut vers le bas du corps de filtre.

2. Procédé de décolmatage selon la revendication 1, **caractérisé en ce que** ladite mise en circulation de liquide de décolmatage consiste à faire circuler le liquide à filtrer restant dans le corps de filtre (1) grâce à un circuit (12) branché en parallèle sur le corps de filtre (1).

3. Procédé de décolmatage selon la revendication 1, **caractérisé en ce que** le liquide de décolmatage circule avec un débit permettant l'entraînement temporaire de bulles du gaz rétro-injecté dans les fibres creuses (9).

4. Procédé de décolmatage selon la revendication 1, **caractérisé en ce que** la phase de décolmatage est consécutive à l'atteinte d'une valeur de consigne choisie parmi une consigne de débit de filtration minimal et une consigne de volume cumulé de filtrat.

5. Procédé de décolmatage selon la revendication 1, **caractérisé en ce que** la phase de décolmatage comprend les étapes suivantes :
- arrêt de l'introduction du liquide à filtrer dans le corps de filtre (1),
- ensuite, mise à une pression extérieure du haut du filtre,
- ensuite, rétro-injection du gaz dans les fibres creuses (9) à une pression supérieure à la pression de point de bulle, et
- mise en circulation simultanée du liquide de décolmatage.

6. Procédé de décolmatage selon la revendication 1, **caractérisé en ce que** le gaz rétro-injecté est choisi parmi l'air, l'azote et les autres gaz neutres.

7. Procédé de décolmatage selon la revendication 1, **caractérisé en ce qu'**il comprend une étape supplémentaire finale consistant à vidanger le corps de filtre (1).

8. Dispositif de filtrage comprenant un filtre à fibres creuses fonctionnant en mode frontal, le filtre comprenant un corps de filtre (1) maintenant les fibres creuses (9) en position verticale, le corps de filtre (1) comprenant des moyens d'introduction (2) du liquide à filtrer dans le volume du corps de filtre (1), ces moyens d'introduction (2) étant situés dans le bas du corps de filtre (1), le filtre comprenant des moyens d'évacuation (4) du filtrat et de rétro-injection d'un gaz de décolmatage situés dans le haut du corps de filtre (1), **caractérisé en ce que** le dispositif comprend un circuit (12) d'aide au décolmatage des fibres creuses (9), ce circuit permettant une introduction de liquide de décolmatage dans le haut du volume du corps de filtre (1) et son évacuation par.le bas du corps de filtre.

9. Dispositif de filtrage selon la revendication 8, **caractérisé en ce que** les fibres creuses (9) sont maintenues uniquement par leurs extrémités supérieures.

10. Dispositif de filtrage selon la revendication 8, **caractérisé en ce que** le corps de filtre (1) comprend un répartiteur (11) permettant de distribuer le liquide à filtrer dans le volume du corps de filtre.

11. Dispositif de filtrage selon la revendication 8, **caractérisé en ce que** le haut du corps de filtre (1) est relié à un évent.

12. Dispositif de filtrage selon la revendication 8, **caractérisé en ce que** le circuit d'aide au décolmatage est un circuit (12) branché en parallèle sur le corps de filtre (1) et permettant de faire circuler, au cours d'une phase de décolmatage, le liquide à filtrer restant dans le corps de filtre (1).

13. Dispositif de filtrage selon la revendication 12, **caractérisé en ce que** le circuit d'aide au décolmatage comprend une vanne d'ouverture/fermeture (14) et une pompe (13).

14. Dispositif de filtrage selon la revendication 13, **caractérisé en ce que** la pompe (13) est choisie parmi les pompes de type centrifuge, péristaltique et à vortex.

15. Dispositif de filtrage selon la revendication 13, **caractérisé en ce que** la vanne (14) est une vanne à membrane.

## Patentansprüche

1. Verfahren zum Rückspülen eines Hohlfaserfilters, das im Frontalmodus bzw. statischen Modus (mode frontal) arbeitet, wobei das Filter einen Filterkörper (1) umfasst, der die Hohlfasern (9) in einer vertikalen Position hält, wobei die zu filternde Flüssigkeit in das Volumen des Filterkörpers (1) von unten eingeleitet und das Filtrat aus dem Filter oben abgeführt wird, wobei das Rückspülverfahren eine Rückeinspritzung (rétro-injection) von Gas in die Hohlfasern (9) umfasst, **dadurch gekennzeichnet, dass** es auch ein Zirkulierenlassen der Rückspülflüssigkeit in dem Volumen des Filterkörpers (1) umfasst, wobei diese Flüssigkeitszirkulation im Filterkörper von oben nach unten erfolgt.

2. Rückspülverfahren nach Anspruch 1, **dadurch gekennzeichnet, dass** das Zirkulierenlassen von Rückspülflüssigkeit darin besteht, die in dem Filterkörper (1) verbleibende zu filternde Flüssigkeit anhand eines parallel zum Filterkörper (1) geschalteten Kreislaufs (12) zirkulieren zu lassen.

3. Rückspülverfahren nach Anspruch 1, **dadurch gekennzeichnet, dass** die Rückspülflüssigkeit mit einem Durchsatz zirkuliert, welcher das temporäre Mitführen von Blasen des rückeingespritzten Gases in den Hohlfasern (9) ermöglicht.

4. Rückspülverfahren nach Anspruch 1, **dadurch gekennzeichnet, dass** die Rückspülphase auf das Erreichen eines Referenzwerts folgt, der aus einem Durchsatz-Referenzwert einer minimalen Filterung und einem Referenzwert eines kumulierten Filtratvolumens ausgewählt wird.

5. Rückspülverfahren nach Anspruch 1, **dadurch gekennzeichnet, dass** die Rückspülphase die folgenden Schritte umfasst:
- Anhalten der Einleitung von zu filternder Flüssigkeit in den Filterkörper (1),
- anschließende äußere Druckbeaufschlagung des Filters von oben,
- anschließende Rückeinspritzung von Gas in die Hohlfasern (9) mit einem höheren Druck als dem Blasenbildungsdruck, und
- gleichzeitiges Zirkulierenlassen der Rückspülflüssigkeit.

6. Rückspülverfahren nach Anspruch 1, **dadurch gekennzeichnet, dass** das rückeingespritzte Gas unter Luft, Stickstoff und den anderen neutralen Gasen ausgewählt wird.

7. Rückspülverfahren nach Anspruch 1, **dadurch gekennzeichnet, dass** ein zusätzlicher abschließender Schritt in der Entleerung des Filterkörpers (1) besteht.

8. Filtervorrichtung mit einem Hohlfaserfilter, das statisch betrieben wird, wobei das Filter einen Filterkörper (1) umfasst, welcher die Hohlfasern (9) in vertikaler Position hält, und der Filterkörper (1) Mittel zum Einleiten der zu filternden Flüssigkeit in das Volumen des Filterkörpers (1) umfasst, wobei sich diese Einleitmittel (2) an der Unterseite des Filterkörpers (1) befinden, das Filter Mittel (4) zur Austragung des Filtrats und zur Rückeinspritzung eines Rückspülgases umfasst, die sich an der Oberseite des Filterkörpers (1) befinden, **dadurch gekennzeichnet, dass** die Vorrichtung einen Rückspül-Hilfskreislauf (12) der Hohlfasern (9) umfasst, wobei dieser Kreislauf eine Einleitung der Rückspülflüssigkeit in das Volumen des Filterkörpers (1) von oben und seine Austragung aus dem Filterkörper von unten gestattet.

9. Filtervorrichtung nach Anspruch 8, **dadurch gekennzeichnet, dass** die Hohlfasern (9) lediglich an ihren oberen Enden festgehalten sind.

10. Filtervorrichtung nach Anspruch 8, **dadurch gekennzeichnet, dass** der Filterkörper (1) einen Verteiler (11) umfasst, der eine Verteilung der zu filternden Flüssigkeit in dem Volumen des Filterkörpers gestattet.

11. Filtervorrichtung nach Anspruch 8, **dadurch gekennzeichnet, dass** die Oberseite des Filterkörpers (1) mit einer Ausgleichsöffnung verbunden ist.

12. Filtervorrichtung nach Anspruch 8, **dadurch gekennzeichnet, dass** der Rückspül-Hilfskreislauf ein parallel zum Filterkörper (1) geschalteter Kreislauf (12) ist und im Verlauf einer Rückspülphase die im Filterkörper (1) verbleibende, zu filternde Flüssigkeit zirkulieren lassen kann.

13. Filtervorrichtung nach Anspruch 12, **dadurch gekennzeichnet, dass** der Rückspül-Hilfskreislauf ein Öffnungs-/Schließventil (14) und eine Pumpe (13) umfasst.

14. Filtervorrichtung nach Anspruch 13, **dadurch gekennzeichnet, dass** die Pumpe (13) unter den Pumpen vom Zentrifugaltyp, vom peristaltischen Typ und vom Wirbelstromtyp ausgewählt ist.

15. Filtervorrichtung nach Anspruch 13, **dadurch gekennzeichnet, dass** das Ventil (14) ein Membranventil ist.

## Claims

1. A method for unclogging a hollow fibre filter operating in frontal mode, the filter comprising a filter body (1) maintaining the hollow fibres (9) in a vertical position, the liquid to be filtered being introduced into the volume of the filter body (1) via the bottom, the filtrate being evacuated via the top of the filter, the unclogging method comprising a reverse injection of gas into the hollow fibres (9), **characterised in that** it also comprises a circulation of unclogging liquid in the volume of the filter body (1), said circulation of liquid taking place from the top towards the bottom of the filter body.

2. The method for unclogging according to claim 1, **characterised in that** said circulation of unclogging liquid consists in circulating the liquid to be filtered remaining in the filter body (1) thanks to a circuit (12) connected in parallel on the filter body (1).

3. The method for unclogging according to claim 1, **characterised in that** the unclogging liquid circulates at a flow rate that allows the temporary sweeping along of bubbles of gas reverse injected into the hollow fibres (9).

4. The method for unclogging according to claim 1, **characterised in that** the unclogging phase is consecutive to the attainment of a predetermined set point chosen among a minimum filtration flow rate set point and a cumulated volume of filtrate set point.

5. The method for unclogging according to claim 1, **characterised in that** the unclogging phase comprises the following steps:
- stopping the introduction of the liquid to be filtered into the filter body (1),
- then, applying an external pressure from the top of the filter,
- then, reverse injecting gas into the hollow fibres (9) at a pressure higher than the bubble point pressure, and
- simultaneously circulating the unclogging liquid.

6. The method for unclogging according to claim 1, **characterised in that** the reverse injected gas is chosen from among air, nitrogen and the other neutral gases.

7. The method for unclogging according to claim 1, **characterised in that** it comprises an additional final step consisting in emptying the filter body (1).

8. A filtering device comprising a hollow fibre filter operating in frontal mode, said filter comprising a filter body (1) maintaining the hollow fibres (9) in a vertical position, the filter body (1) comprising means of introduction (2) of the liquid to be filtered into the volume of the filter body (1), said means of introduction (2) being located in the bottom of the filter body (1), the filter comprising means of evacuation (4) of the filtrate and reverse injection of an unclogging gas located in the top of the filter body (1), **characterised in that** the device comprises a circuit (12) to aid the unclogging of the hollow fibres (9), said circuit allowing an introduction of unclogging liquid into the top of the volume of the filter body (1) and its evacuation via the bottom of the filter body.

9. The filtering device according to claim 8, **characterised in that** the hollow fibres (9) are maintained uniquely by their upper ends.

10. The filtering device according to claim 8, **characterised in that** the filter body (1) comprises a flow splitting device (11) making it possible to distribute the liquid to be filtered in the volume of the filter body.

11. The filtering device according to claim 8, **characterised in that** the top of the filter body (1) is connected to a vent.

12. The filtering device according to claim 8, **characterised in that** the unclogging aid circuit is a circuit (12) connected in parallel on the filter body (1) and making it possible to circulate, during an unclogging phase, the liquid to be filtered remaining in the filter body (1).

13. The filtering device according to claim 12, **characterised in that** the unclogging aid circuit comprises an opening / closing valve (14) and a pump (13).

14. The filtering device according to claim 13, **characterised in that** the pump (13) is chosen from among centrifuge, peristaltic and vortex type pumps.

15. The filtering device according to claim 13, **characterised in that** the valve (14) is a diaphragm valve.
